# EUROPEAN PATENT APPLICATION

(11) **EP 1 743 925 A1**
(43) Date of publication of application: **17.01.2007**
(21) Application number: 05015504.3
(22) Date of filing: 16.07.2005
(51) Int. Cl.: C09D 5/44, C08K 5/3492, C09D 133/14

(54) **Water reducible binders for cathodic electrodeposition coating compositions**

(71) Applicant: Cytec Surface Specialties Austria GmbH, 8010 Graz (AT)
(72) Inventor: Paar, Willibald Dr., 8010 Graz (AT); Kurzmann, Franz, 8413 St. Georgen (AT); Billiani, Johann Dr., 8042 Graz (AT)
(74) Representative: Deckers, Hellmuth Alexander

(57) **Abstract**

A water-reducible coating composition **BC** comprising a vinyl type copolymer **B** comprising moieties derived from at least one monomer **B1** having at least one amino group in the molecule, and a curing agent **C** comprising a N-alkoxycarbonylamino triazine structure, a process for their preparation, and a method of use thereof particularly in cathodic electrodeposition coatings

## Description

This invention relates to water-reducible binders for cathodic electrodeposition coating compositions.

Combinations of polymers made by radical polymerisation of monomers that carry amino groups and hydroxy functional adducts made by reacting epoxy resins with amines have been known from DE-OS 36 28 121. A selection of such combinations wherein both constituents have the same long chain alkyl radicals chemically incorporated have been described in EP 0 525 695 B1. These binders are crosslinked using at least difunctional crosslinkers with a number average molar mass of from 170 g/mol to 10 kg/mol, having blocked isocyanate groups or ester groups which are subject to transesterification.

These systems of binder and crosslinkers still suffer from drawbacks, especially concerning the high temperature needed to release the capping agents from the blocked isocyanate and activate the isocyanate. The use of catalysts is known to accelerate such uncapping reaction. However, at the temperatures needed for fast curing, an unwanted yellowing of the paint film is also observed; this is especially visible in paints of light hue. Lowering the curing temperatures leads to extended curing times which finally cause to the same, or even worse, yellowing.

A further problem is encountered when paint films made from the binder mixtures and blocked isocyanates are exposed to UV light. Such paint films are prone to photochemical deterioration or even challcing.

It is therefore the object of this invention to provide a system of binder and curing agent that has no yellowing propensity, allows curing temperatures not exceeding 130 °C, does not need a curing catalyst or accelerator, and leads to paint films with outstanding UV stability.

These objects have been achieved by a water-reducible coating composition **BC** comprising a hydroxy functional vinyl type copolymer **B** comprising moieties derived from at least one monomer **B1** having at least one amino group in the molecule, and a curing agent **C** comprising a N-allcoxycarbonylamino triazine structure.

A further object of this invention is a water-reducible coating composition ABC comprising an epoxy amine adduct **A,** a hydroxy functional vinyl type copolymer **B** comprising moieties derived from at least one monomer **B1** having at least one amino group in the molecule, and a curing agent **C** comprising a N-alkoxycarbonylamino triazine structure.

Particularly good results have been obtained from coating compositions wherein the copolymers **B** are modified by copolymerising monomers **B2** which are esters of an olefinically unsaturated carboxylic acid **B21** with an aliphatic linear or branched alcohol **B22** having from 5 to 40 carbon atoms, the mass fraction of moieties derived from such monomers **B2** in the mass of the copolymer **B** preferably being from 0.5 % to 10 %.

It is further preferred to use, in a composition **ABC,** an epoxy amine adduct **A** which has been modified by incorporating at least one compound **A1** selected from the group consisting of a glycidyl ether **A11** of an aliphatic linear or branched alcohol **B22** having from 5 to 40 carbon atoms, a glycidyl ester **A12** of a linear or branched aliphatic acid having from 5 to 40 carbon atoms, and an aliphatic primary amine **A13** which may be linear or branched and has from 5 to 40 carbon atoms. Preferably, the mass fraction of moieties derived from such compounds **A1** in the mass of the epoxy amine adduct **A** is from 0.5 % to 10 %.

It is particularly preferred that both **A** and **B** are modified in this way, by incorporation of compounds **A1** into **A,** and of **B2** into **B.** Still more preferably is this modification made with alkyl residues in compounds **A1** and **B2** that have the same number of carbon atoms or differ at most by a number of carbon atoms which is calculated by taking the square root of the number of carbon atoms of the higher alkyl residue, taking the integer part of this square root and deducting 2.

Preferably, each of **A** and **B** have hydroxyl groups in an amount such that the hydroxyl number of the mixture of **A** and **B,** as it is present in a composition **ABC,** is in the range of from 50 mg/g to 200 mg/g.

The epoxy amine adducts **A** are made by reaction of epoxy resins **A2** and amines **A3,** compounds of the type **A1** as detailed supra optionally being included in the synthesis. As epoxy resins **A2,** it is preferred to use such resins that are made by reaction of epichlorohydrine with polyvalent phenolic compounds (the TAFFY process), or by the so-called advancement process where the diglycidyl ether of a divalent phenol is reacted with further divalent phenols, under ring-opening of the oxirane groups and etherification. Especially preferred are epoxy resins based on bisphenol A and bisphenol F, which may also be modified by incorporation of polypropylene glycol.

The amines **A3** used in synthesising the epoxy amine adducts **A** have more than one amine hydrogen atom, and are preferably selected from the group consisting of aliphatic primary amines and aliphatic disecondary amines, where it is possible to use also such amines that have one or more tertiary amino groups in addition to the primary or secondary amino groups.

The copolymers **B** are made by copolymerisation of amino functional olefinically unsaturated monomers **B1,** optionally, of the esters **B2** as detailed supra, of esters **B3** of linear or branched aliphatic alcohols **B31** having from 1 to 4 carbon atoms and olefinically unsaturated carboxylic acids **B21,** hydroxy functional esters **B4** of the acids **B21** and polyhydric aliphatic alcohols **B41** where at least one hydroxyl group of these polyhydric alcohols remains unesterified, the olefinically unsaturated acids **B21** themselves, and optionally, other vinyl monomers **B5** selected from the group consisting of vinyl aromatic compounds such as styrene, vinyl toluene and alpha methyl styrene, vinyl ketones, vinyl esters, and unsaturated nitriles like acrylonitrileand methacrylonitrile. The amino functional monomers **B1** are preferably selected from the group consisting of N,N-dialkylaminoalkyl(meth)acrylates and N-alkylaminoalkyl(meth)acrylates, wherein N,N-dimethylaminoalkyl(meth)acrylates and N-methylaminoalkyl(meth)-acrylates and the corresponding ethylamino compounds are preferred, the further alkyl residue being preferably ethyl, propyl, or butyl.

The acids **B21** are preferably acrylic or methacrylic acid. It is also possible to use, as acids **B21,** half esters of olefinically unsaturated dicarboxylic acids with alcohols **B31,** such as maleic acid monomethyl ester.

The epoxy amine adduct **A** has preferably an amine number of from 30 mg/g to 150 mg/g, particularly preferred from 40 mg/g to 130 mg/g, and especially preferred, from 50 mg/g to 120 mg/g, a hydroxyl number of preferably from 50 mg/g to 400 mg/g, particularly preferred from 60 mg/g to 300 mg/g, and especially preferred, from 70 mg/g to 200 mg/g. Its weight-average molar mass M_{w} is preferably from 500 g/mol to 20 kg/mol, particularly preferably from 800 g/mol to 15 kg/mol.

The copolymer **B** preferably has an amine number of from 30 mg/g to 150 mg/g, particularly preferred from 40 mg/g to 130 mg/g, and especially preferred, from 50 mg/g to 120 mg/g, a hydroxyl number of from 30 mg to 350 mg/g, particularly preferred from 40 mg/g to 250 mg/g, and especially preferred, from 50 mg/g to 200 mg/g. Its weight-average molar mass M_{w} is preferably from 2000 g/mol to 800 kg/mol, particularly preferably from 3000 g/mol to 500 kg/mol. The glass transition temperature, as caclulated according to the Flory-Fox equation, is between -50 °C and 150 °C, preferably between -20 °C and + 50 °C.

The amine number, AN, is defined according to DIN 53 176 as the ratio of the mass of potassium hydroxide ***m***_{KOH} which needs the same amount of acid for neutralisation as the sample, and the mass ***m***_{B} of that sample (mass of solids in the sample for solutions or dispersions); the customary unit is "mg/g".

The hydroxyl number, HN, is defined according to DIN EN ISO 4629 (DIN 53 240) as the ratio of the mass of potassium hydroxide ***m***_{KOH} having the same number of hydroxyl groups as the sample, and the mass ***m***_{B} of that sample (mass of solids in the sample for solutions or dispersions); the customary unit is "mg/g".

The curing agent **C** comprises a N-allcoxycarbonylamino triazine structure. Preferably, C is selected from the group consisting of alkyl esters of 1,3,5-triazine 2,4,6-triscarbamic acid, with alkyl groups which may be linear or branched and have from 1 to 20 carbon atoms, aryl esters of the same acid where the aryl groups have from 6 to 20 carbon atoms, and aralkyl esters of the same acid wherein the aralkyl group has from 7 to 20 carbon atoms. It is also possible that one molecule of the curing agent **C** comprises different groups as ester groups. Particularly preferred are such curing agents **C** where only alkyl groups form the esters, an these alkyl groups have from 1 to 8 carbon atoms, the trimethyl ester and the tri-n-butyl and tri-isobutyl esters, and mixtures of these being especially preferred.

The coating compositions **BC** of the present invention are preferably made by polymerising the vinyl monomers as a mixture, or in a desired sequence, in a water miscible solvent that is inert to the polymerisation conditions, or by emulsion polymerisation using customary emulsifiers. Polymerisation may be initiated by the customary systems, such as peroxide type radical initiators, azo type radical initiators, and, in the case of emulsion polymerisation, also redox type initiators. The vinyl polymer **B** formed by solution polymerisation is dispersed in water, after at least partial neutralisation; an emulsion polymer is also at least partly neutralised, the resulting dispersions being mixed with the curing agent **C,** in each case, customary additives, pigments and fillers optionally being added and well dispersed therein. Further mixture of **B** and **C** is then added to this pigment paste to adjust the level of pigmentation as is customary in the art.

The coating compositions **ABC** according to the invention are preferably made by first synthesising the epoxy amine adduct, by reaction of the epoxy resins **A2** and the amines **A3,** optionally in the presence of the amines **A1.** The resulting adduct is then neutralised at least partly, the degree of neutralisation being preferably between 15 % and 80 %, and dispersed in water. Polymerisation of the monomers **B1** to **B5** is preferably conducted in the presence of the dispersion of the epoxy amine adduct, by addition of radical initiators which are preferably of the peroxidetype or may also be of the redox type. The resulting aqueous dispersion comprising both **A** and **B** is then mixed with the curing agent C, customary additives, pigments and fillers being added and well dispersed therein. Further mixture of **A**, **B** and **C** is then added to this pigment paste to adjust the level of pigmentation as is customary in the art.

The resulting coating compositions **BC** or **ABC** can be applied to substrates in the usual way, by spraying, brushing, or application with a doctor blade. It is particularly preferred, however, to deposit a coating on an electrically conductive substrate by the method of electrodeposition, where the substrate functions as a cathode in an electric cell.

The coated substrates are then removed from the cell, rinsed with water, and the coating is baked to provide a cured film. The film obtained by the coating compositions of this invention has outstanding UV stability, and does not show any signs of yellowing even under prolonged cure. Compared to a similar coating composition where the curing agent **C** is replaced by a capped isocyanate, lower bake temperatures can be used with curing agent **C** while the hardness, resilience, and corrosion protection provided by the coating films are on par.

The invention is further illustrated by the examples that follow.

### Examples

### Example 1 Adduct of 2-ethylhexyl glycidyl ether and diethylene triamine

577 g (3.1 mol) of 2-ethylhexyl glycidyl ether were added to a solution of 103 g (1 mol) of diethylene triamine in 170 g of methoxypropanol at 60 °C over two hours. The mixture is held under stirring at this temperature until the sum of the amount of substance of residual epoxy groups and the amount of substance of amine hydrogen atoms, divided by the mass of solid resin ("specific epoxy amine content", titration with a solution of perchloric acid in glacial acetic acid, concentration 0.1 mol/l), was 37 mmol/kg. Then, a mixture of 190 g of a bisphenol A based epoxy resin (having a specific epoxy group content of 5,26 mol/kg) and 48 g of methoxypropanol was also added over two more hours, the reaction being continued until the specific epoxy amine content was 27.6 mmol/kg. The resulting solution had a mass fraction of solids of 80 %.

### Example 2 Preparation of an epoxy resin A

652 g of the solution of Example 1, 570 g of a bisphenol A based epoxy resin (having a specific epoxy group content of 5,26 mol/kg), 77 g of 2-ethylhexylamine and 162 g of methoxypropanol were reacted at 60 °C to complete consumption of the amine hydrogen atoms. The specific epoxy amine content was 21.5 mmol/kg. Then, 1357 g of a solution of a bisphenol A based diepoxy resin (specific epoxy group content of 2.1 mol/kg, dissolved in methoxypropanol with a mass fraction of solids of 70 %) and 189 g of diethanolamine were added, the reaction mixture was again held at 60 °C until the amine hydrogen atomes were all consumed, corresponding to a specific epoxy amine content of 17 mmol/kg. In a further stage, the remaining oxirane groups were consumed by addition of 78 g of N,N-dimethylaminopropylamine and reacting further two hours at 60 °C, one hour at 90 °C, and three more hours at 120 °C until a specific epoxy amine content of 15.5 mmol/kg was reached. The mixture was then cooled and diluted with methoxypropanol to a mass fraction of solids of 65 %.

### Example 3 Preparation of a Vinyl Copolymer B

308 g of the dispersion prepared in Example 2 were mixed with 444 g of methoxypropanol and heated to 85 °C under a nitrogen blanket in a vessel equipped with a stirrer, a reflux condenser, a feed vessel, and a thermometer. Via the feed vessel, a mixture of 84 g of dimethylaminoethyl methacrylate, 159 g of 2-hydroxyethyl methacrylate, 306 g of n-butyl methacrylate, 106 g of methyl methacrylate, 145 g of 2-ethylhexyl acrylate, 24 g of azobis isobutyronitrile, and 2 g of tert. dodecyl mercaptane was added over 4 hours. After increasing the temperature to 90 °C, the mixture was held at this temperature for two hours. Further 10 g of azobis isobutyronitrile were added, and the batch kept at 90 °C for another three hours until a conversion of at least 99.5 % was attained.

### Example 4 Preparation of a Coating Composition ABC

A part of the dispersion of Example 3 comprising 70 g of solids was admixed to 60 g of a solution comprising 30 g of tris- n-butoxycarbonylamino triazine. Acetic acid (40 mmol, equivalent to 2.4 g) was added for neutralisation, and deionised water was then added to adjust the mass fraction of solids to 15 %. Steel sheets treated with zinc and phosphate were immersed into this diluted coating composition, and a paint layer was electrodeposited at 250 V. The paint layer was cured at 125 °C for thirty minutes to leave a dry film of 20 µm thickness. Acetone resistance was measured, there was no damage to the coating layer even at 200 double rubs.

### Example 5 Comparative Testing

A series of experiments were made to show the effect of bake temperature on the coating properties. The following CED paints were prepared, with the comparative paint composition ("Comp.") having been synthesised in accordance with Example 3 of Table 4 of EP 0 525 695 B1:

**Table 1 CED Paints**

| | Paint Designation | 1 | 2 | 3 | Comp. |
|---|---|---|---|---|---|
| Mass of Binder | in g | 70 | 75 | 65 | 65 |
| Mass of Curing Agent | in g | 30⁺ | 25⁺ | 35⁺ | 35* |
| Amount of Substance of Formic Acid | in mmol | 40 | 35 | 45 | 45 |
| Mass of Catalyst (DBTL) | in g | 0 | 0 | 0.8 | 0.8 |
| Mass of Pigment (TiO₂) | in g | 50 | 45 | 55 | 55 |
| Mass Fraction of Solids | in % | 20 | 18 | 18 | 18 |

Curing agent was tris- n-butoxycarbonylamino triazine (designated by ⁺); in the comparative example (designated by *), a capped isocyanate curing agent was prepared in a multi-step reaction from 486 g of diethylene glycol monobutyl ether and 666 g of diisophorone diisocyanate by reaction at 35 °C, with 0.5 g of dibutyltin dilaurate (DBTL) as catalyst, dissolved in 200 g of methoxypropyl acetate. After reaching a constant content of isocyanate groups, the reaction mixture was heated to 50 °C, and 134 g of trimethylol propane dissolved in 229 g of methoxypropyl acetate were slowly added, and the reaction mixture was held at 80 °C until all isocyanate groups were consumed. The mass fraction of solids of this curing agent solution was 75 %.

Steel sheets pretreated with zinc phosphate were coated by cationic electrodeposition, at 25 °C and 250 V. The coating films were cured at the temperature indicated in table 5, for thirty minutes. A dry film thickness of 22 µm was obtained in each case. The following results were found:

**Table 5 Test Results**

| | Paint | 1 | 2 | 3 | Comp. |
|---|---|---|---|---|---|
| Gloss | in % | 65 | 70 | 75 | 65 |
| UV Resistance | in % | 65 | 70 | 74 | 55 |
| Curing Temperature | in °C | 150 | 140 | 125 | 180 |
| Salt Spray Test | in mm | 2 | 2 | 1 | 1 |

Gloss was determined with a gonioreflectometer GR-Comp, at an angle of 60°, compared to a standard (=100 %).
UV resistance was determined as retention of gloss (original value = 100 %) after exposure for 1000 hours, with a UV CON, type UC-372-2 UV (Atlas Electric Devices Co., Chicago), where the gloss was determined as detailed supra.
Salt Spray Test was conducted in accordance with ASTM-B 117-64, where the distance of the front of rust formation under the coating film to the cut in mm is recorded.

It can be seen that already at a curing temperature of 125 °C, the coating composition according to the invention yields a paint film having high gloss, good UV resistance, and excellent corrosion protection. The comparison example where a capped isocyanate was used as curing agent, had also excellent corrosion protection, but both gloss and UV resistance did not reach the high level of a paint film made with the inventive composition. Lowering the curing temperature is of high importance for energy savings, it also leads to shorter cycle times. It can also be seen that a higher curing temperature (paints 1 and 2) has a negative effect on the properties of the cured film.

## Claims

1. A water-reducible coating composition **BC** comprising a curing agent **C** having a N-alkoxycarbonylamino triazine structure, and a hydroxy functional vinyl type copolymer **B** which copolymer **B** comprises moieties derived from at least one monomer **B1** having at least one amino group in the molecule.

2. A water-reducible coating composition **ABC** comprising the water-reducible coating composition **BC** of claim 1 and an epoxy amine adduct **A.**

3. The water-reducible coating composition **ABC** of claim 2 wherein the mass fraction of the epoxy amine adduct **A** is from 3 % to 30 % of the sum of masses of the epoxy amine adduct **A** and of the vinyl type copolymer **B**, and the mass fraction of the vinyl type copolymer **B** is from 97 % to 70 % of the same sum of masses.

4. The water-reducible coating composition **ABC** of claim 2 wherein the sum of the mass fractions of the epoxy amine adduct **A** and of the vinyl type copolymer **B** is from 60 % to 80 % of the sum of masses of epoxy amine adduct **A**, of the vinyl type copolymer **B**, and of the curing agent **C.**

5. The water-reducible coating composition **ABC** of claim 1 wherein the curing agent **C** is selected from the group consisting of tris-n-butoxy carbonylamino triazine, tris-iso-butoxy carbonylamino triazine, and tris-methoxy carbonylamino triazine.

6. The water-reducible coating composition **ABC** of claim 2 wherein the epoxy amine adduct **A** comprises a mass fraction of from 0.5 % to 10 % of at least one compound **A1** selected from the group consisting of a glycidyl ether **A11** of an aliphatic linear or branched alcohol **B22** having from 5 to 40 carbon atoms, a glycidyl ester **A12** of a linear or branched aliphatic acid having from 5 to 40 carbon atoms, and an aliphatic primary amine **A13** which may be linear or branched and has from 5 to 40 carbon atoms.

7. The water-reducible coating composition **BC** of claim 1 wherein the vinyl type copolymer **B** comprises moieties derived from monomers **B2** which are esters of an olefinically unsaturated carboxylic acid **B21** with an aliphatic linear or branched alcohol **B22** having from 5 to 40 carbon atoms, the mass fraction of moieties derived from such monomers **B2** in the mass of the copolymer **B** being from 0.5 % to 10 %.

8. The water-reducible coating composition **ABC** of claim 2 which comprises an epoxy amine adduct **A** according to claim 6 and a vinyl type copolymer **B** according to claim 7.

9. A process for the production of the water-reducible coating composition **ABC** of claim 2 wherein
- in a first step, the epoxy amine adduct **A** is prepared by reaction of epoxy resins **A2** and amines **A3,**
- in a second step, the resulting adduct is neutralised at least partly by addition of acid, and then dispersed in water,
- in a third step, polymerisation of monomers **B1** to **B5** is conducted in the presence of the dispersion of the epoxy amine adduct **A**, by addition of radical initiators, wherein at least one each of monomers **B1, B3,** and **B4** are subjected to polymerisation, the monomers **B1** to **B5** being selected from the group consisting of amino functional olefinically unsaturated monomers **B1,** of esters **B2** of olefinically unsaturated carboxylic acids **B21** and aliphatic linear or branched alcohol **B22** having from 5 to 40 carbon atoms, of esters **B3** of linear or branched aliphatic alcohols **B31** having from 1 to 4 carbon atoms and olefinically unsaturated carboxylic acids **B21,** hydroxy functional esters **B4** of the acids **B21** and polyhydric aliphatic alcohols **B41** where at least one hydroxyl group of these polyhydric alcohols remains unesterified, the olefinically unsaturated acids **B21** themselves, and vinyl monomers **B5** selected from the group consisting of vinyl aromatic compounds such as styrene, vinyl toluene and alpha methyl styrene, vinyl ketones, vinyl esters, and unsaturated nitriles like acrylonitrile and methacrylonitrile, and
- in a fourth step, mixing the resulting aqueous dispersion comprising both **A** and **B** with the curing agent **C.**

10. A method of use of the water-reducible coating composition **BC** of claim 1 comprising neutralising the mixture of components **B** and C by adding an acid wherein the quantity of acid is chosen such that the amount of substance of acidic hydrogen atoms is from 20 % of 100 % of the basic groups in the mixture of components **B** and **C,** diluting the neutralised mixture with water to a mass fraction of solids of from 10 % to 50 %, adding at least one of pigments, fillers, levelling agents, wetting agents, antisettling agents, and antifoaming agents, to form a paint, and applying the said paint to the surface of a substrate by cathodic electrodeposition.

11. A method of use of the water-reducible coating composition **ABC** of claim 1 comprising neutralising the mixture of components **A**, **B**, and **C** by adding an acid wherein the quantity of acid is chosen such that the amount of substance of acidic hydrogen atoms is from 20 % of 100 % of the basic groups in the mixture of components **A**, **B**, and **C**, diluting the neutralised mixture with water to a mass fraction of solids of from 10 % to 50 %, adding at least one of pigments, fillers, levelling agents, wetting agents, antisettling agents, and antifoaming agents, to form a paint, and applying the said paint to the surface of a substrate by cathodic electrodeposition.
